# EUROPEAN PATENT SPECIFICATION

(11) **EP 2 714 769 B1**
(45) Date of publication and mention of the grant of the patent: **19.04.2017**
(21) Application number: 12721563.0
(22) Date of filing: 22.05.2012
(51) Int. Cl.: C08G 64/30

(54) **PROCESS FOR THE POLYMERIZATION OF CYCLIC CARBONATES**
VERFAHREN ZUR POLYMERISIERUNG VON ZYKLISCHEN CARBONATEN
PROCÉDÉ DE POLYMÉRISATION DE CARBONATES CYCLIQUES

(30) Priority: 23.05.2011 EP 11167138
(43) Date of publication of application: 09.04.2014
(73) Proprietor: Total Research & Technology Feluy, 7181 Seneffe (BE)
(72) Inventor: HELOU, Marion, B-1050 Ixelles (BE); SLAWINSKI, Martine, B-1400 Nivelles (BE)
(74) Representative: Raboin, Jean-Christophe
(86) International application number: PCT/EP2012/059438
(87) International publication number: WO 2012/160042

(56) References cited:
- EP-A1- 2 253 637
- WO-A2-2009/118538
- WILLIAMS C K ET AL: "A Highly Active Zinc Catalyst for the Controlled Polymerization of Lactide", JOURNAL OF THE AMERICAN CHEMICAL SOCIETY, AMERICAN CHEMICAL SOCIETY, WASHINGTON, DC; US, vol. 125, no. 37, 1 January 2003 (2003-01-01), pages 11350-11359, XP002534371, ISSN: 0002-7863, DOI: 10.1021/JA0359512 [retrieved on 2003-08-21]

## Description

### FIELD OF THE INVENTION

The invention relates to a process for the preparation of polycarbonates. In particular the invention relates to a process for the preparation of polycarbonates by polymerization of cyclic carbonates.

### BACKGROUND OF THE INVENTION

Aliphatic polycarbonates are highly valuable biodegradable polymers. Because of their outstanding properties, aliphatic polycarbonates can be used in numerous applications such as textile or packaging and in the biomedical field as diagnostic and therapeutic tools or as tissue engineering and/or tissue repair systems. Recently, polycarbonates have become of major importance as alternatives to synthetic polymers.

Several processes have been developed for the preparation of aliphatic polycarbonates from cyclic carbonates. One of the most efficient processes is ring opening polymerization (ROP). Ring opening polymerization allows to control the polymerization process and thereby the structure of the produced polycarbonate.

The process for the preparation of polycarbonates comprises the polymerization of cyclic carbonates in the presence of a catalyst system. Among the possible catalysts, organometallic catalysts and metal salts are most commonly used. In particular, Sn(Oct)₂ is frequently used as a catalyst. Other systems based on tin, aluminum, rare earth metals, magnesium or calcium are known as catalysts for the ring opening polymerization of cyclic carbonates. However, some of these catalysts are toxic or require at least toxic reagents during the polymerization process.

Consequently, it is an object of the present inventors to provide an improved process for the polymerization of cyclic carbonates.

### SUMMARY OF THE INVENTION

The present inventors have now found that this object can be obtained by using a process for the polymerization of cyclic carbonates as presently claimed.

In particular, the present invention relates to a process for polymerizing cyclic carbonates comprising the step of contacting a cyclic carbonate with a catalyst of Formula (I), 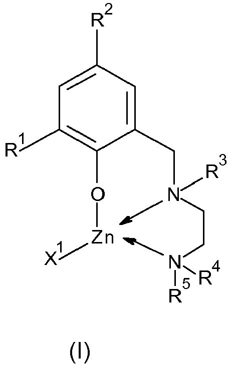 wherein
R¹ and R² are each independently C₁₋₁₀alkyl,
R³, R⁴ and R⁵ are each independently C₁₋₁₀alkyl, or
R³ and R⁴ are covalently bound to each other and are each a methylene and
R⁵ is C₁₋₁₀alkyl,
X¹ is selected from C₁₋₁₀alkyl, -OR⁶, or -N(SiR⁷₃)₂, R⁶ is C₁₋₁₀alkyl, and R⁷ is C₁₋₆alkyl.

Preferably, the present invention relates to a process for polymerizing cyclic carbonates comprising the step of contacting a cyclic carbonate with a catalyst of Formula (I), wherein
R¹ and R² are each independently C₁₋₁₀alkyl,
R³, R⁴ and R⁵ are each independently C₁₋₁₀alkyl, or
R³ and R⁴ are covalently bound to each other and are each a methylene and R⁵ is C₁₋₁₀alkyl,
X¹ is selected from C₁₋₁₀alkyl, -OR⁶, or -N(SiR⁷₃)₂, R⁶ is C₁₋₁₀alkyl, and R⁷ is C₁₋₆alkyl, and wherein said step is performed at a temperature comprised between 120°C and 200°C.

The process of the present invention allows the conversion of very large amounts of cyclic carbonate monomer using low amounts of catalyst thereby improving the productivity. The present process has also the advantage of minimizing the residual catalyst content in the final polycarbonates, while maintaining a good control over the polymerization. The process allows very low initial loading of catalyst, which has the advantage of considerably limiting the potential toxicity and thus allows such polycarbonates to be used for instance in the biomedical field.

Furthermore, the process of the present invention allows the production of polycarbonates with improved properties. In particular the present invention allows the production of colorless polycarbonates, even when produced using high temperatures. In addition, the process of the present invention allows the production of polycarbonates with improved properties such as high molecular mass and narrow molecular mass distribution in an efficient and hence economical way.

The efficiency (selectivity, yield ...) of the catalyst used in the present process is known to be totally unpredictable and it is therefore surprising that the present process allows the reproducible production of polycarbonates with such improved properties.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, taken in conjunction with the accompanying drawings, which illustrate, by way of example, the principles of the invention. The reference figures quoted below refer to the attached drawings.

### BRIEF DESCRIPTION OF THE DRAWINGS

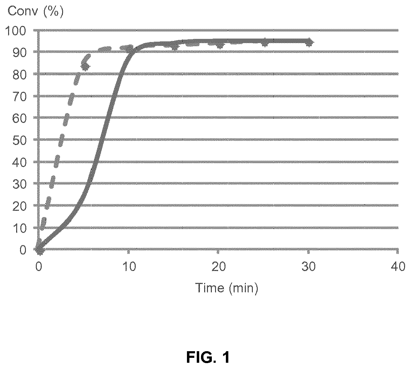

Figure 1 illustrates a graph representing the kinetics of the polymerization of trimethylenecarbonate (TMC) with DDTBP-Zn(OEt) catalyst (dashed) according to an embodiment of the invention and of the polymerization of TMC with a conventional Sn(Oct)₂ catalyst (full line) shown as the conversion of TMC as a function of time.

### DETAILED DESCRIPTION OF THE INVENTION

Before the present process of the invention is described, it is to be understood that this invention is not limited to particular processes, components, or devices described, as such processes, components, and devices may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

When describing the present invention, the terms used are to be construed in accordance with the following definitions, unless a context dictates otherwise.

Whenever the term "substituted" is used in the present invention, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation to a useful degree of purity from a reaction mixture.

The term "C₁₋₂₀alkyl", as a group or part of a group, refers to a hydrocarbyl radical of Formula CₙH₂ₙ₊₁ wherein n is a number ranging from 1 to 20. Generally, the alkyl groups comprise from 1 to 20 carbon atoms, preferably from 3 to 12 carbon atoms, more preferably 3, 4, 5, 6, 7, 8, 9, 10, 11 or 12 carbon atoms. Alkyl groups may be linear, branched or cyclic and may be substituted as indicated herein. When a subscript is used herein following a carbon atom, the subscript refers to the number of carbon atoms that the named group may contain. Thus, for example, C₁₋₂₀alkyl groups include all linear, branched or cyclic alkyl groups with between 1 and 20 carbon atoms, and thus includes for example methyl, ethyl, cyclopropyl, *n*-propyl, *i*-propyl, 2-methyl-ethyl, cyclobutyl, butyl and its isomers (e.g. *n*-butyl, *i*-butyl and *t*-butyl); cyclopentyl, pentyl and its isomers, cyclohexyl, hexyl and its isomers, cycloheptyl, heptyl and its isomers, cyclooctyl, octyl and its isomers, nonyl and its isomers, decyl and its isomers, undecyl and its isomers, dodecyl and its isomers, tridecyl and its isomers, tetradecyl and its isomers, pentadecyl and its isomers, hexadecyl and its isomers, heptadecyl and its isomers, octadecyl and its isomers, nonadecyl and its isomers, icosyl and its isomers, and the like. For example, C₁₋₁₀alkyl includes all linear, or branched or cyclic alkyl groups with between 1 and 10 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers, heptyl and its isomers, octyl and its isomers, nonyl and its isomers, decyl and its isomers and the like. For example, C₁₋₆alkyl includes all linear, or branched or cyclic alkyl groups with between 1 and 6 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers.

The term "C₆₋₃₀aryl", as a group or part of a group, refers to a polyunsaturated, aromatic hydrocarbyl group having a single ring (i.e. phenyl) or multiple aromatic rings fused together (e.g. naphthalene), or linked covalently, typically containing 6 to 30 atoms; wherein at least one ring is aromatic. Non-limiting examples of C₆₋₃₀aryl comprise phenyl, biphenylyl, biphenylenyl, or 1-or 2-naphthanelyl.

The term "C₆₋₃₀arylC₁₋₂₀alkyl", as a group or part of a group, means a C₁₋₂₀alkyl as defined herein, wherein a hydrogen atom is replaced by a C₆₋₃₀aryl as defined herein. Examples of aralkyl radicals include benzyl, phenethyl, dibenzylmethyl, methylphenylmethyl, 3-(2-naphthyl)-butyl, and the like.

The term "halogen", as a group or part of a group, is generic for fluoro, chloro, bromo or iodo.

The present invention provides a process for polymerizing cyclic carbonates comprising contacting said cyclic carbonate with a catalyst of Formula (I), wherein
R¹ and R² are each independently C₁₋₁₀alkyl; preferably, R¹ and R² are each independently C₁₋₆alkyl; preferably, R¹ and R² are each independently C₁₋₄alkyl; for example, R¹ and R² can be each independently selected from the group consisting of methyl, ethyl, *n*-propyl, *i*-propyl, 2-methyl-ethyl, *n*-butyl, *i*-butyl and *t*-butyl; preferably, R¹ and R² can be each independently selected from the group consisting of methyl, ethyl, *i*-propyl and *t*-butyl; for example R¹ and R² can be each independently selected from *i*-propyl or *t*-butyl; preferably, R¹ and R² are *t*-butyl,
R³, R⁴ and R⁵ are each independently C₁₋₁₀alkyl, preferably, R³, R⁴ and R⁵ are each independently C₁₋₆alkyl, preferably R³, R⁴ and R⁵ are each independently C₁₋₄alkyl, for example, R³, R⁴ and R⁵ can be each independently selected from the group consisting of methyl, ethyl, *n*-propyl, *i*-propyl, 2-methyl-ethyl, *n*-butyl, *i*-butyl and *t*-butyl; for example, R³, R⁴ and R⁵ can be each independently selected from the group consisting of methyl, ethyl, *i*-propyl and *t*-butyl; for example, R³, R⁴ and R⁵ are each independently selected from methyl or ethyl; preferably, R³, R⁴ and R⁵ are each independently methyl,
or R³ and R⁴ are covalently bound to each other and are each a methylene and R⁵ is C₁₋₁₀alkyl; preferably R⁵ is C₁₋₆alkyl; preferably, R⁵ is C₁₋₄alkyl; for example R⁵ can be selected from the group consisting of methyl, ethyl, *n*-propyl, *i*-propyl, 2-methyl-ethyl, *n*-butyl, *i*-butyl and *t*-butyl; for example R⁵ can be selected from the group consisting of methyl, ethyl, *i*-propyl and *t*-butyl; for example R⁵ can be selected from methyl or ethyl; for example R⁵ can be methyl;
X¹ is selected from C₁₋₁₀alkyl, -OR⁶, or -N(SiR⁷₃)₂, R⁶ is C₁₋₁₀alkyl, and R⁷ is C₁₋₆alkyl; preferably, X¹ is selected from C₁₋₆alkyl, -OR⁶, or -N(SiR⁷₃)₂, R⁶ is C₁₋₆alkyl, and R⁷ is C₁₋₆alkyl; preferably, X¹ is selected from C₁₋₄alkyl, -OR⁶, or -N(SiR'₃)₂, R⁶ is C₁₋₄alkyl, and R⁷ is C₁₋₄alkyl; for example X¹ can be selected from the group consisting of methyl, ethyl, *n*-propyl, *i*-propyl, 2-methyl-ethyl, *n*-butyl, *i*-butyl and *t*-butyl, or -OR⁶, or -N(SiR⁷₃)₂, R⁶ can be selected from the group consisting of methyl, ethyl, *n*-propyl, *i*-propyl, 2-methyl-ethyl, *n*-butyl, *i*-butyl and *t*-butyl, and R⁷ can be selected from the group consisting of methyl, ethyl, *n*-propyl, *i*-propyl, 2-methyl-ethyl, *n*-butyl, *i*-butyl and *t*-butyl; preferably, X¹ can be selected from the group consisting of methyl, ethyl, *i*-propyl and *n*-butyl, or -OR⁶, R⁶ can be selected from the group consisting of methyl, ethyl, *i*-propyl and *t*-butyl; preferably, X¹ can be selected from -OR⁶, R⁶ can be selected from the group consisting of methyl, ethyl, *i*-propyl and *t*-butyl; preferably, X¹ can be -OR⁶, and R⁶ is ethyl.

In an embodiment, R¹ and R² are each independently C₁₋₆alkyl. Preferably, R¹ and R² can be each independently selected from the group consisting of methyl, ethyl, *i*-propyl and *t*-butyl; for example R¹ and R² can be each independently selected from *i*-propyl or *t*-butyl; preferably, R¹ and R² are *t*-butyl.

In an embodiment, R³, R⁴ and R⁵ are each independently C₁₋₆alkyl. For example, R³, R⁴ and R⁵ can be each independently selected from the group consisting of methyl, ethyl, *i-*propyl and *t*-butyl; preferably, R³, R⁴ and R⁵ can be each independently selected from methyl or ethyl; more preferably, R³, R⁴ and R⁵ can be methyl.

For example, the process can be performed with a catalyst of Formula (I) wherein, R¹ and R² are each independently C₁₋₆alkyl; R³, R⁴ and R⁵ are each independently C₁₋₆alkyl; and X¹ is selected from C₁₋₆alkyl, -OR⁶, or -N(SiR⁷₃)₂, R⁶ is C₁₋₆alkyl, and R⁷ is C₁₋₆alkyl.

For example, the process can be performed with a catalyst of Formula (I) wherein, R¹ and R² are each independently C₁₋₆alkyl; R³ and R⁴ are covalently bound to each other and are each a methylene and R⁵ is C₁₋₆alkyl; and X¹ is selected from C₁₋₆alkyl, -OR⁶, or - N(SiR⁷₃)₂, R⁶ is C₁₋₆alkyl, and R⁷ is C₁₋₆alkyl.

For example, the process can be performed with a catalyst of Formula (I) wherein, R¹ and R² are each independently C₁₋₄alkyl; R³, R⁴ and R⁵ are each independently C₁₋₄alkyl, X¹ is selected from C₁₋₄alkyl, -OR⁶, or -N(SiR⁷₃)₂, R⁶ is C₁₋₄alkyl, and R⁷ is C₁₋₄alkyl.

For example, the process can be performed with a catalyst of Formula (I) wherein, R¹ and R² are each independently C₁₋₄alkyl; R³ and R⁴ are covalently bound to each other and are each a methylene and R⁵ is C₁₋₁₄alkyl; and X¹ is selected from C₁₋₄alkyl, -OR⁶, or - N(SiR⁷₃)₂, R⁶ is C₁₋₄alkyl, and R⁷ is C₁₋₄alkyl.

In a preferred embodiment, R¹ and R² are each independently C₁₋₄alkyl, preferably t-butyl or isopropyl; R³, R⁴ and R⁵ are each independently C₁₋₂alkyl, X¹ is -OR⁶, and R⁶ is C₁₋₂alkyl.

In a preferred embodiment, R¹ and R² are each independently C₁₋₄alkyl, preferably t-butyl or isopropyl; R³ and R⁴ are covalently bound to each other and are each a methylene and R⁵ is C₁₋₂alkyl; X¹ is -OR⁶, R⁶ is C₁₋₂alkyl.

In an embodiment, the present invention relates to a process for polymerizing cyclic carbonates comprising contacting said cyclic carbonate with a catalyst of Formula (Ia), (Ib), (Ic) or (Id), 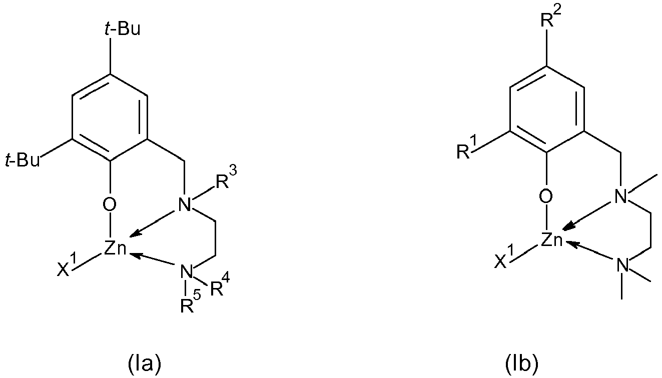 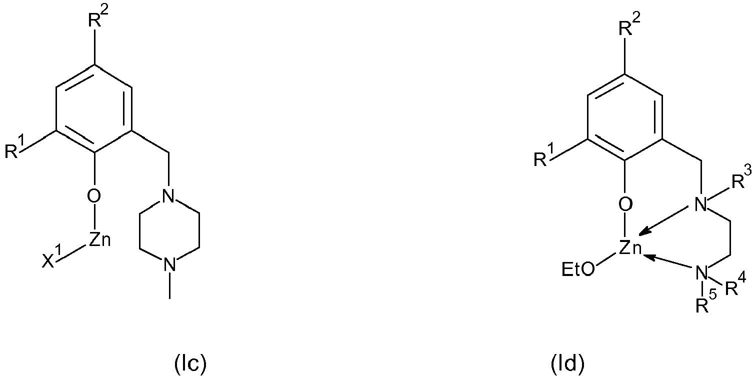 wherein R¹, R², R³, R⁴, R⁵ and X¹ have the same meaning as that defined above.

In an embodiment, said catalyst of Formula (I) is (2,4-di-tert-butyl-6-(((2-(dimethylamino)ethyl)(methyl)amino)methyl)phenoxy)(ethoxy)zinc, also referred to as "DDTBP-Zn (OEt)" represented by Formula (III). 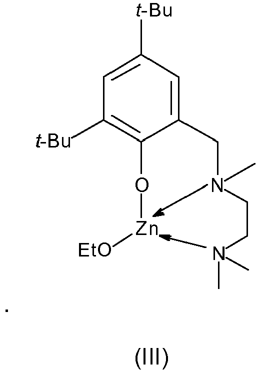 (2,4-di-tert-butyl-6-(((2-(dimethylamino)ethyl)(methyl)amino)methyl)phenoxy)(ethoxy)zinc can be prepared as described in Williams et al. (J. Am. Chem. Soc., 2003, 125, 11350-59) hereby incorporated by reference.

In an embodiment, the present invention relates to a process for polymerizing five- or six-or seven-membered cyclic carbonates comprising contacting said five- or six- or seven-membered cyclic carbonate with a catalyst of Formula (I), (Ia), (Ib), (Ic), (Id) or (III).

As used herein, the terms "cyclic carbonate" or "cyclic carbonate monomer" are used interchangeably.

The cyclic carbonate can be a five-membered cyclic carbonate, a six-membered cyclic carbonate or a seven-membered cyclic carbonate.

The five-membered cyclic carbonate can be for instance but is not limited to ethylene carbonate, propylene carbonate or 4,5-dimethyl-1,3-dioxolan-2-one.

The six-membered cyclic carbonate can be for instance but is not limited to trimethylenecarbonate (TMC), 2-benzyloxy-trimethylenecarbonate (BTMC), 2-hydroxy-trimethylenecarbonate (TMCOH), 4-(benzyloxymethyl)-1,3-dioxolan-2-one (BDMC), 4-(hydroxymethyl)-1,3-dioxolan-2-one (DMCOH), 2-oxy-trimethylenecarbonate (OTMC), 5,5-dimethoxy-1,3-dioxan-2-one (TMC(OMe)₂) or dehydrotrimethylenecarbonate (DHTMC). The seven-membered cyclic carbonate can be for instance but is not limited to 1,3-dioxepan-2-one or a derivative thereof.

Preferably the cyclic carbonate is a six-membered cyclic carbonate.

The polymerization can occur with the same cyclic carbonate monomer or with combinations of cyclic carbonate monomers.

The inventors surprisingly found that only minute amounts of the catalyst were needed to transform very large amounts of cyclic carbonate monomer. In an embodiment, the molar ratio of said cyclic carbonate to said catalyst can be of from about 2500 to about 1000000 mol/mol. For example, the molar ratio of said cyclic carbonate to said catalyst can be of from about 3000 to about 800000 mol/mol. Preferably, the molar ratio of said cyclic carbonate to said catalyst can be of from about 4000 to about 750000; preferably, the molar ratio of said cyclic carbonate to said catalyst can be of from about 5000 to about 500000.

The low amounts of catalyst required to polymerize large amounts of cyclic carbonate can advantageously reduce the potential toxicity of the catalyst. The catalyst thus allows the preparation of uncontaminated biocompatible polycarbonates that can be directly applied, for instance in the biomedical field. The efficiency and selectivity of this catalyst is known to be unpredictable and it is therefore surprising to get such good improved polymers with the process of the present invention.

In an embodiment, polymerization of cyclic carbonates can occur by ring opening polymerization.

In an embodiment, the process can be performed at a temperature, of at least 120°C, preferably comprised between 120°C and 200°C, for example between 130°C and 200°C, for example between 140°C and 200°C, for example between 150°C and 190°C, preferably between 160°C and 190°C; preferably between 165°C and 185°C.

In an embodiment, the process can be performed in the presence of an initiator of the polymerization.

In an embodiment, the initiator of the polymerization is an alcohol. The alcohol can be represented by Formula (II),

R⁸-OH (II)

wherein R⁸ is selected from C₁₋₂₀alkyl, C₆₋₃₀aryl, or C₆₋₃₀arylC₁₋₂₀alkyl, optionally substituted by one or more substituents, each independently selected from the group consisting of halogen, hydroxyl and C₁₋₆alkyl; preferably, R⁸ is selected from C₃₋₁₂alkyl, C₆₋₁₀aryl, or C₆₋₁₀arylC₃₋₁₂alkyl, optionally substituted by one or more substituents, each independently selected from the group consisting of halogen, hydroxyl and C₁₋₆alkyl; preferably, R⁸ is selected from C₃₋₁₂alkyl, C₆₋₁₀aryl, or C₆₋₁₀arylC₃₋₁₂alkyl, optionally substituted by one or more substituents, each independently selected from the group consisting of halogen, hydroxyl and C₁₋₄alkyl. The alcohol can be a polyol such as diol, triol or higher functionality polyhydric alcohol. The alcohol may be derived from biomass such as for instance glycerol or any other sugar-based alcohol such as for example erythritol. The alcohol can be used alone or in combination with another alcohol.

In an embodiment, non-limiting examples of initiators include isopropanol, propanediol, trimethylolpropane, 2-butanol, 3-buten-2-ol, 1,3-butanediol, 1,4-butanediol, 1,6-hexanediol, 1,7-heptanediol, 1-octanol, benzyl alcohol, 4-bromophenol,1,4-benzenedimethanol and (4-trifluoromethyl)benzyl alcohol. Preferably, the initiator can be isopropanol, 1,4-butanediol or 1-octanol.

The molar ratio of the initiator of the polymerization to the catalyst can be of from about 10 to about 2000, for example of from about 50 to about 1500, for example of from about 100 to about 1500, preferably of from about 220 to about 1100.

Performing the process of the present invention in the presence of an initiator of the polymerization such as an alcohol allows the efficient production of polycarbonates with high molecular mass and narrow molecular mass distribution.

In an embodiment, the process can be performed in bulk. For instance, the process can be performed in molten cyclic carbonate. The process can be performed without solvent or can be performed in a minimum amount of solvent. In an embodiment, said minimum amount of solvent can be the solvent necessary to dissolve the catalyst. The solvent can be an aromatic or aliphatic hydrocarbon such as toluene, or a chlorinated solvent.

In an embodiment, the process can be carried out with unpurified cyclic carbonate monomer. The process can also be carried out with cyclic carbonate monomer being crystallized one or more times in solvent and dried under vacuum before use. The solvent used during crystallization can be the same or different from the solvent used during the polymerization process.

In an embodiment, the process can be performed by contacting said cyclic carbonate with the catalyst in a reactor equipped with an agitator, for instance a high viscosity agitator or by extrusion in an extruder or horizontal reactor, with one, double or multiple screws.

In an embodiment, the process can be performed by contacting the cyclic carbonate and the catalyst under inert atmosphere for example in the presence of argon or nitrogen. In a further embodiment, the process can be performed by contacting the cyclic carbonate and the catalyst under ambient atmosphere.

In an embodiment, the process can be performed in the presence of stabilizing agents or antioxidants known by the skilled in the art. The stabilizing agent can be for instance (2,4-di-*tert*-butylphenyl)pentaerythritol diphosphite, also named Ultranox 626. The process can be performed in a continuous or discontinuous manner.

The present invention also encompasses a process according to the invention, to prepare homo- or co-polymers of carbonate and wherein the carbonate is a five-, a six-or a seven-membered cyclic carbonate. Preferably the carbonate is a five- or six-membered cyclic carbonate.

The present invention also encompasses homo- or co-polymers of carbonates obtainable by the process of the invention.

The inventors surprisingly found that polycarbonates prepared with the process of the invention have high molar mass and narrow molar mass distribution. The "mass distribution" or "molar mass distribution" is defined by the ratio *M_{w}*/*Mₙ* of the weight average molecular weight *M_{w}* to the number average molecular weight *Mₙ*.

In an embodiment, the present process allows the preparation of polycarbonates, with a number average molecular weight *Mₙ* which can range between about 4000 and about 60000 g.mol⁻¹. For example the *Mₙ* of the polycarbonates obtained can range between about 4500 and about 55000 g.mol⁻¹. For example the *Mₙ* of the polycarbonates obtained can range between about 4500 and about 50000 g.mol⁻¹.

The *Mₙ* can be measured by any adequate technique known to the skilled person for molar mass determination, for instance by chromatography such as gas phase chromatography in tetrahydrofuran (THF) at 20°C compared to polystyrene with a correction coefficient of 0.73.

In an embodiment, the mass molar distribution of the polycarbonate obtained can range between about 1.50 and about 1.80.

The process of the present invention allows high conversion of cyclic carbonate monomer to polycarbonate. In an embodiment, the conversion can be of from about 80% to about 100%; preferably, the conversion can be of from about 83% to about 98%. The conversion is calculated as the percentage of monomer converted to polymer as follows: [amount of precipitated polycarbonate obtained after the process (polymer)/amount of cyclic carbonate as starting material (monomer)] x 100. The amount of precipitated polycarbonate obtained after the process and of cyclic carbonate as starting material can be measured by weighing. High conversion (89-94%) of cyclic carbonate monomer to polycarbonate could be obtained for example in 30 min at 185°C.

The present invention allowed the preparation of colorless polycarbonates, even when produced using high temperatures, said polycarbonates having high molecular weight while using low quantities of catalyst. As used herein, a polycarbonate is "colorless" if the human eye observes the polycarbonate as "true white" rather than a colored tone. For example, there would be no clear yellow, pink, or blue tones in the observed polycarbonate.

The present invention can be further illustrated by the following examples, although it will be understood that these examples are included merely for purposes of illustration and are not intended to limit the scope of the invention unless otherwise specifically indicated.

### EXAMPLES

### Example 1: Polymerization of trimethylenecarbonate with DDTBP-Zn(OEt) in the presence of 1-octanol

2,4-di-tert-butyl-6-(((2-(dimethylamino)ethyl)(methyl)amino)methyl)phenoxy(ethoxy)zinc or "DDTBP-Zn(OEt)" was prepared as described in Williams et al. (J. Am. Chem. Soc., 2003, 125, 11350-59).

Polymerization reactions of trimethylenecarbonate (TMC, 1,3-dioxane-2-one, technical grade, Boeringer Ingelheim, Germany) were performed with DDTBP-Zn(OEt) in the presence of 1-octanol as initiator of the polymerization. The polymerizations were performed in glass reactors of 50 ml immersed in heat blocks set at 185°C. The reactors were prepared under inert atmosphere, with 5 g of TMC. TMC was used unpurified or was crystallized twice in toluene and dried under vacuum before use. The initiator 1-octanol was added in a catalytic solution containing the catalyst and toluene, and 1 ml of this solution was added to the molten monomer. The reactions were performed during 30 min at 185°C and 500 rpm. The molar ratio of DDTBP-Zn(OEt), octanol and TMC used are listed in Table 1.

The obtained polycarbonate was dissolved in chloroform and purified upon precipitation in ethanol and dried under vacuum. The conversion of cyclic carbonate monomer to polycarbonate was calculated on precipitated polymer as the percentage of TMC converted to polytrimethylenecarbonate (PTMC) as follows: [amount of precipitated PTMC/amount of TMC] x 100. The amount of precipitated PTMC and TMC was measured by weighing. The molar mass was determined by size exclusion chromatography calibrated with polystyrene with a correction coefficient of 0.73. The molar mass distribution was defined by the ratio M_{w}/Mₙ of the weight average molecular weight M_{w} to the number average molecular weight Mₙ.

The polymerization of TMC in the presence of DDTBP-Zn(OEt) catalyst and 1-octanol as initiator of the polymerization, resulted in the formation of colorless PTMC with 83.4 to 96.7% conversion in 30 min at 185°C. The results are shown in Table 1. The experimentally obtained molar mass (M_{n,SEC}) was in accordance with the theoretically expected molar mass (M_{n,theo}). The molar masses obtained corresponded to Mₙ, values between 4580 g.mol⁻¹ and 46490 g.mol⁻¹ with a molar mass distribution (M_{w}/Mₙ) of 1.55 to 1.75.

**Table 1**

| Test | TMC | Octanol/ DDTBP-Zn(OEt) (mol/mol) | TMC/DDTBP-Zn(OEt) (mol/mol) | Conv (%) | M_{n,theo} (g.mol⁻¹) | M_{n,SEC} (g.mol⁻¹) | M_{w}/Mₙ |
|---|---|---|---|---|---|---|---|
| 1 | unpurified | 11 | 5 000 | 83.4 | 38660 | 4 580 | 1.56 |
| 2 | 2x cryst | 11 | 5 110 | 96.5 | 45 900 | 29 500 | 1.71 |
| 3 | unpurified | 100 | 51 500 | 95.7 | 50 440 | 24 240 | 1.61 |
| 4 | 2x cryst | 100 | 50 080 | 91.3 | 46 815 | 37 705 | 1.59 |
| 5 | unpurified | 220 | 102 180 | 96.7 | 45 940 | 32 860 | 1.69 |
| 6 | 2x cryst | 220 | 105 160 | 93 | 45 510 | 39 690 | 1.6 |
| 7 | unpurified | 500 | 254 740 | 93.7 | 48 870 | 36 625 | 1.75 |
| 8 | 2x cryst | 500 | 241 250 | 94.9 | 46 880 | 46 490 | 1.63 |
| 9 | 2x cryst | 1 100 | 493 870 | 90.4 | 41 435 | 40 250 | 1.55 |

| | | | | | | | |
|---|---|---|---|---|---|---|---|
| *Abbreviations: Conv: conversion. 2xcryst: crystallized twice.* | | | | | | | |

Consequently, polycarbonates with high molar mass and narrow mass distribution were obtained. The process achieved high conversion of large amounts of cyclic carbonate with a small amount of the catalyst in a short conversion time. This is surprising as this catalyst is known to have unpredictable efficiency.

### Example 2: Polymerization of TMC with DDTBP-Zn(OEt) catalyst compared with polymerization of TMC with a conventional catalyst

A polymerization reaction was preformed using trimethylenecarbonate (TMC) in the presence of DDTBP-Zn(OEt) and in the presence of 1-octanol as initiator of the polymerization. The polymerization was performed in a glass reactor of 50 ml immersed in heat blocks set at 185°C. The reactor was prepared under inert atmosphere, with 5 g of TMC. TMC was crystallized twice in toluene and dried under vacuum before use. The alcohol 1-octanol was added in a catalytic solution containing the catalyst and toluene, and 1 ml of this solution was added to the molten monomer. The reaction was performed during 30 min at 185°C and 500 rpm. The molar ratio of DDTBP-Zn(OEt), octanol and TMC used are listed in Table 2. The obtained polycarbonate was dissolved in chloroform and purified upon precipitation in ethanol and dried under vacuum.

As a comparative example the same reaction was performed using trimethylenecarbonate (TMC) in the presence of Sn(Oct)₂ as catalyst and in the presence of 1-octanol as initiator of the polymerization. The polymerization was performed as described above. The molar ratio of Sn(Oct)₂, octanol and TMC used are listed in Table 2.

The parameters were measured as described above. The results are shown in Table 2.

**Table 2**

| Test | TMC | Catalyst | Octanol/ catalyst (mol/mol) | TMC/ catalyst (mol/mol) | Conv (%) | Color | M_{n,theo} (g.mol⁻¹) | M_{n,SEC} (g.mol⁻¹) | M_{w}/Mₙ |
|---|---|---|---|---|---|---|---|---|---|
| 1 | 2x cryst | DDTBP-Zn(OEt) | 1 100 | 493 870 | 90.4 | colorless | 41 435 | 40 250 | 1.55 |
| 2 | 2x cryst | Sn(Oct)₂ | 455 | 5000 | 92 | slightly yellow | 41 630 | 38910 | 1.65 |

| | | | | | | | | | |
|---|---|---|---|---|---|---|---|---|---|
| *Abbreviations: Conv: conversion. 2xcryst: crystallized twice.* | | | | | | | | | |

As shown in Table 2, the polymerization of TMC with DDTBP-Zn(OEt) resulted in the preparation of colorless PTMC and a conversion of 90.4%. The polymerization of TMC with Sn(Oct)₂ resulted in the preparation of a slightly yellow PTMC with a 92% conversion. The process using the DDTBP-Zn(OEt) catalyst achieved high conversion of large amounts of cyclic carbonate monomer with a small amount of the catalyst, when compared with the polymerization using Sn(Oct)₂.

For the process in the presence of DDTBP-Zn(OEt), it was possible to use molar ratio TMC/DDTBP-Zn(OEt) as high as 500000, while for the process in the presence of Sn(Oct)₂, the polymerization was under control with molar ratio TMC/Sn(Oct)₂ up to 10000, but for higher ratio, the polymerization slowed down.

The kinetics of the polymerization of TMC with DDTBP-Zn(OEt) or Sn(Oct)₂ catalyst were investigated by comparing the conversion (%) as a function of time: six identical reactors were prepared for a polymerization of 30 minutes and every 5 minutes one reaction was stopped by removing one reactor of the heat blocks. For each reactor, the conversion (%) was calculated as a function of time. The results are shown in Figure 1. As shown in Figure 1, polymerization kinetic of TMC in the presence of DDTBP-Zn(OEt) as catalyst according to the invention was faster than the polymerization kinetic of TMC in the presence of Sn(Oct)₂.

It is to be understood that although preferred embodiments and/or materials have been discussed for providing embodiments according to the present invention, various modifications or changes may be made without departing from the scope and spirit of this invention.

## Claims

1. A process for polymerizing cyclic carbonates comprising the step of contacting a cyclic carbonate with a catalyst of Formula (I), 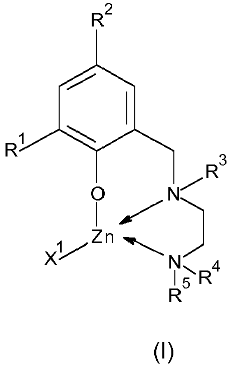 wherein
R¹ and R² are each independently C₁₋₁₀alkyl,
R³, R⁴ and R⁵ are each independently C₁₋₁₀alkyl, or
R³ and R⁴ are covalently bound to each other and are each a methylene and R⁵ is C₁₋₁₀alkyl,
X¹ is selected from C₁₋₁₀alkyl, -OR⁶, or -N(SiR⁷₃)₂, R⁶ is C₁₋₁₀alkyl, and R⁷ is C₁₋₆alkyl, and wherein said step is performed at a temperature comprised between 120°C and 200°C.

2. The process according to claim 1, wherein R¹ and R² are each independently C₁₋₆alkyl, preferably C₁₋₄alkyl.

3. The process according to claim 1 or 2, wherein R³, R⁴ and R⁵ are each independently C₁₋₆alkyl, preferably C₁₋₄alkyl.

4. The process according to any one of claims 1 to 3, wherein X¹ is selected from C₁₋₆alkyl, -OR⁶, or -N(SiR⁷₃)₂, R⁶ is C₁₋₆alkyl, and R⁷ is C₁₋₄alkyl.

5. The process according to any one of claims 1 to 4, wherein the molar ratio of said cyclic carbonate to said catalyst is of from about 2500 to about 1000000 mol/mol, preferably from about 3000 to about 800000 mol/mol, more preferably from about 4000 to about 750000; more preferably from about 5000 to about 500000.

6. The process according to any one of claims 1 to 5, wherein the cyclic carbonate is a five-, a six-or a seven-membered cyclic carbonate.

7. The process according to any one of claims 1 to 6, wherein said cyclic carbonate is selected from the group comprising trimethylenecarbonate (TMC), ethylene carbonate, propylene carbonate, 4,5-dimethyl-1,3-dioxolan-2-one, 2-benzyloxy-trimethylenecarbonate (BTMC), 2-hydroxy-trimethylenecarbonate (TMCOH), 4-(benzyloxymethyl)-1,3-dioxolan-2-one (BDMC), 4-(hydroxymethyl)-1,3-dioxolan-2-one (DMCOH), 2-oxy-trimethylenecarbonate (OTMC), 5,5-dimethoxy-1,3-dioxan-2-one (TMC(OMe)₂), dehydrotrimethylenecarbonate (DHTMC) and 1,3-dioxepan-2-one.

8. The process according to any one of claims 1 to 7, wherein said step is performed at a temperature comprised between 160°C and 190°C.

9. The process according to any one of claims 1 to 8, wherein said step is performed in bulk.

10. The process according to any one of claims 1 to 9, wherein said step is performed without solvent.

11. The process according to any one of claims 1 to 10, wherein said step is performed in the presence of an initiator of the polymerization.

12. The process according to claim 11, wherein the molar ratio of said initiator of the polymerization to said catalyst is of from about 10 to about 2000, preferably of from about 100 to about 1500.

13. The process according to any one of claims 1 to 12, wherein the said initiator has a Formula (II),
R⁸-OH (II)
wherein R⁸ is selected from C₁₋₂₀alkyl, C₆₋₃₀aryl, or C₆₋₃₀arylC₁₋₂₀alkyl, optionally substituted by one or more substituents, each independently selected from the group consisting of halogen, hydroxyl and C₁₋₆alkyl.

14. The process according to any one of claims 1 to 13, wherein said initiator is selected from the group comprising 1-octanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol and (4-trifluoromethyl)benzyl alcohol; preferably, said initiator is selected from 1-octanol, isopropanol, or 1,4-butanediol.

15. The process according to any one of claims 1 to 15, to prepare homo- or co-polymers of carbonate and wherein the carbonate is a five-, a six-or a seven-membered cyclic carbonate.

## Patentansprüche

1. Verfahren zum Polymerisieren von cyclischen Carbonaten, das den Schritt des Inkontaktbringens eines cyclischen Carbonats mit einem Katalysator der Formel (I) umfasst, 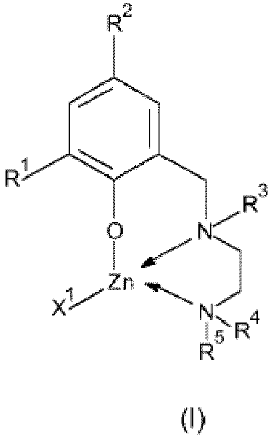 wobei:
R¹ und R² jeweils unabhängig C₁₋₁₀-Alkyl sind,
R³, R⁴ und R⁵ jeweils unabhängig C₁₋₁₀-Alkyl sind, oder
R³ und R⁴ kovalent aneinander gebunden sind oder jeweils ein Methylen sind und R⁵ C₁₋₁₀-Alkyl ist,
X¹ aus C₁₋₁₀-Alkyl, -OR⁶ oder -N(SiR⁷₃)₂ ausgewählt ist, R⁶ C₁₋₁₀-Alkyl ist und R⁷ C₁₋₆-Alkyl ist, und wobei der Schritt bei einer Temperatur zwischen 120 °C und 200 °C durchgeführt wird.

2. Verfahren nach Anspruch 1, wobei R¹ und R² jeweils unabhängig C₁₋₆-Alkyl sind, vorzugsweise C₁₋₄-Alkyl.

3. Verfahren nach Anspruch 1 oder 2, wobei R³, R⁴ und R⁵ jeweils unabhängig C₁₋₆-Alkyl sind, vorzugsweise C₁₋₄-Alkyl.

4. Verfahren nach einem der Ansprüche 1 bis 3, wobei X¹ aus C₁₋₆-Alkyl, OR⁶ oder -N(SiR⁷₃)₂ ausgewählt ist, R⁶ C₁₋₆-Alkyl ist und R⁷ C₁₋₄-Alkyl ist.

5. Verfahren nach einem der Ansprüche 1 bis 4, wobei das Molverhältnis des cyclischen Carbonats zum Katalysator ungefähr 2500 bis ungefähr 1.000.000 mol/mol ist, vorzugsweise ungefähr 3000 bis ungefähr 800.000 mol/mol, mehr bevorzugt ungefähr 4000 bis ungefähr 750.000; mehr bevorzugt ungefähr 5000 bis ungefähr 500.000.

6. Verfahren nach einem der Ansprüche 1 bis 5, wobei das cyclische Carbonat ein 5-, 6- oder 7-gliedriges cyclisches Carbonat ist.

7. Verfahren nach einem der Ansprüche 1 bis 6, wobei das cyclische Carbonat aus der Gruppe ausgewählt ist, umfassend Trimethylencarbonat (TMC), Ethylencarbonat, Propylencarbonat, 4,5-Dimethyl-1,3-dioxolan-2-on, 2-Benzyloxy-trimethylencarbonat (BTMC), 2-Hydroxy-trimethylencarbonat (TMCOH), 4-(Benzyloxymethyl)-1,3-dioxolan-2-on (BDMC), 4-(Hydroxymethyl)-1,3-dioxolan-2-on (DMCOH), 2-Oxytrimethylencarbonat (OTMC), 5,5-Dimethoxy-1,3-dioxan-2-on (TMC(OMe)₂), Dehydrotrimethylencarbonat (DHTMC) und 1,3-Dioxepan-2-on.

8. Verfahren nach einem der Ansprüche 1 bis 7, wobei der Schritt bei einer Temperatur zwischen 160 °C und 190 °C durchgeführt wird.

9. Verfahren nach einem der Ansprüche 1 bis 8, wobei der Schritt in Massen durchgeführt wird.

10. Verfahren nach einem der Ansprüche 1 bis 9, wobei der Schritt ohne Lösungsmittel durchgeführt wird.

11. Verfahren nach einem der Ansprüche 1 bis 10, wobei der Schritt in Gegenwart eines Initiators der Polymerisation durchgeführt wird.

12. Verfahren nach Anspruch 11, wobei das Molverhältnis des Initiators der Polymerisation zum Katalysator ungefähr 10 bis ungefähr 2000 beträgt, vorzugsweise ungefähr 100 bis ungefähr 1500.

13. Verfahren nach einem der Ansprüche 1 bis 12, wobei der Initiator die Formel (II) aufweist,
R⁸-OH (II)
wobei R⁸ aus C₁₋₂₀-Alkyl, C₆₋₃₀-Aryl oder C₆₋₃₀-Aryl-C₁₋₂₀-alkyl ausgewählt ist, das optional mit einem oder mehreren Substituenten substituiert ist, die jeweils unabhängig aus der Gruppe ausgewählt sind, bestehend aus Halogen, Hydroxyl und C₁₋₆-Alkyl.

14. Verfahren nach einem der Ansprüche 1 bis 13, wobei der Initiator aus der Gruppe ausgewählt ist, umfassend 1-Octanol, Isopropanol, Propandiol, Trimethylolpropan, 2-Butanol, 3-Buten-2-ol, 1,3-Butandiol, 1,4-Butandiol, 1,6-Hexandiol, 1,7-Heptandiol, Benzylalkohol, 4-Bromphenol, 1,4-Benzoldimethanol und (4-Trifluormethyl)benzylalkohol; vorzugsweise wobei der Initiator aus 1-Octanol, Isopropanol oder 1,4-Butandiol ausgewählt ist.

15. Verfahren nach einem der Ansprüche 1 bis 15 zur Herstellung von Homo- oder Copolymeren von Carbonat und wobei das Carbonat ein 5-, 6- oder 7-gliedriges cyclisches Carbonat ist.

## Revendications

1. Procédé pour polymériser des carbonates cycliques, comprenant l'étape de mise en contact d'un carbonate cyclique avec un catalyseur de formule (I), 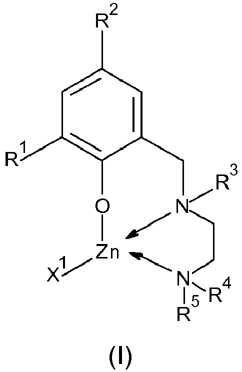 dans laquelle
chacun de R¹ et R² est indépendamment un alkyle en C₁ à C₁₀,
chacun de R³, R⁴ et R⁵ est indépendamment un alkyle en C₁ à C₁₀, ou bien
R³ et R⁴ sont liés de manière covalente l'un à l'autre et sont chacun un méthylène et
R⁵ est un alkyle en C₁ à C₁₀,
X¹ est choisi parmi alkyle en C₁ à C₁₀, -OR⁶, et -N(SiR⁷₃)₂, et
R⁶ est un alkyle en C₁ à C₁₀, et R⁷ est un alkyle en C₁ à C₆,
et dans lequel ladite étape est effectuée à une température comprise entre 120°C et 200°C.

2. Procédé selon la revendication 1, dans laquelle chacun de R¹ et R² est indépendamment un alkyle en C₁ à C₆, de préférence un alkyle en C₁ à C₄.

3. Procédé selon la revendication 1 ou 2, dans lequel chacun de R³, R⁴ et R⁵ est indépendamment un alkyle en C₁ à C₆, de préférence un alkyle en C₁ à C₄.

4. Procédé selon l'une quelconque des revendications 1 à 3, dans lequel X¹ est choisi parmi alkyle en C₁ à C₆, -OR⁶, et -N(SiR⁷₃)₂, R⁶ est un alkyle en C₁ à C₆, et R⁷ est un alkyle en C₁ à C₄.

5. Procédé selon l'une quelconque des revendications 1 à 4, dans lequel le rapport molaire dudit carbonate cyclique audit catalyseur est d'environ 2 500 à environ 1 000 000 mol/mol, de préférence d'environ 3 000 à environ 800 000 mol/mol, mieux encore d'environ 4 000 à environ 750 000 ; plus particulièrement d'environ 5 000 à environ 500 000.

6. Procédé selon l'une quelconque des revendications 1 à 5, dans lequel le carbonate cyclique est un carbonate cyclique à cinq, six ou sept chaînons.

7. Procédé selon l'une quelconque des revendications 1 à 6, dans lequel ledit carbonate cyclique est choisi dans l'ensemble comprenant le carbonate de triméthylène (TMC), le carbonate d'éthylène, le carbonate de propylène, la 4,5-diméthyl-1,3-dioxolan-2-one, le carbonate de 2-benzyloxytriméthylène (BTMC), le carbonate de 2-hydroxytriméthylène (TMCOH), la 4-(benzyloxyméthyl)-1,3-dioxolan-2-one (BDMC), la 4-(hydroxyméthyl)-1,3-dioxolan-2-one (DMCOH), le carbonate de 2-oxytriméthylène (OTMC), la 5,5-diméthoxy-1,3-dioxan-2-one (TMC(OMe)₂), le carbonate de déshydrotriméthylène (DHTMC), et la 1,3-dioxépan-2-one.

8. Procédé selon l'une quelconque des revendications 1 à 7, dans lequel ladite étape est effectuée à une température comprise entre 160°C et 190°C.

9. Procédé selon l'une quelconque des revendications 1 à 8, dans lequel ladite étape est effectuée en masse.

10. Procédé selon l'une quelconque des revendications 1 à 9, dans lequel ladite étape est effectuée sans solvant.

11. Procédé selon l'une quelconque des revendications 1 à 10, dans lequel ladite étape est effectuée en présence d'un amorceur de polymérisation.

12. Procédé selon la revendication 11, dans lequel le rapport molaire dudit amorceur de polymérisation audit catalyseur est d'environ 10 à environ 2 000, de préférence d'environ 100 à environ 1 500.

13. Procédé selon l'une quelconque des revendications 1 à 12, dans lequel ledit amorceur est de formule (II),
R⁸-OH (II)
dans laquelle R⁸ est choisi parmi alkyle en C₁ à C₂₀, aryle en C₆ à C₃₀, et (aryle en C₆ à C₃₀)alkyle en C₁ à C₂₀, éventuellement substitué par un ou plusieurs substituants, chacun indépendamment choisi dans l'ensemble constitué par les halogènes, hydroxyle, et alkyle en C₁ à C₆.

14. Procédé selon l'une quelconque des revendications 1 à 13, dans lequel ledit amorceur est choisi dans l'ensemble constitué par le 1-octanol, l'isopropanol, le propanediol, le triméthylolpropane, le 2-butanol, le 3-butén-2-ol, le 1,3-butanediol, le 1,4-butanediol, le 1,6-hexanediol, le 1,7-heptanediol, l'alcool benzylique, le 4-bromophénol, le 1,4-benzènediméthanol et l'alcool (4-trifluorométhyl)benzylique ; de préférence ledit amorceur est choisi parmi le 1-octanol, l'isopropanol, et le 1,4-butanediol.

15. Procédé selon l'une quelconque des revendications 1 à 15, pour préparer des homo- ou co-polymères de carbonate, dans lequel le carbonate est un carbonate cyclique à cinq, six ou sept chaînons.
